# EUROPEAN PATENT APPLICATION

(11) **EP 1 152 359 A1**
(43) Date of publication of application: **07.11.2001**
(21) Application number: 01303209.9
(22) Date of filing: 05.04.2001
(51) Int. Cl.: G06F 17/60

(54) **Shopping assistance method and service system**

(30) Priority: 06.05.2000 GB 0010868
(71) Applicant: Hewlett-Packard Company, Palo Alto, CA 94304 (US)
(72) Inventor: L'Anson, Colin, Frenchay, Bristol BS16 1JL (GB); McDonnell, James Thomas Edward, Clifton, Bristol BS8 2JU (GB); Spratt, Michael P., Weston, Bath BA1 2XN (GB); Waters, John Deryk, Combe Down, Bath BA2 5AN (GB); Wilcock, Lawrence, Malmesbury, Wiltshire SN16 9TU (GB)
(74) Representative: Squibbs, Robert Francis

(57) **Abstract**

A shopping assistance service system (40) is provided to which enquirers (8A) can submit enquiries regarding the availability of item of interest from local traders (70). The enquiry message (150) includes a description (151) of the item of interest, this description being intended for human interpretation and taking the form of image and/or unstructured audio data. The service system (40) automatically determines a location associated with the enquiry, this being either the enquirer's current location or a location where the enquirer intends to shop. The service system (40) then selects from a database of traders (44), traders appropriate to the enquiry at least in terms of location and the type of the item of interest, and forwards the description of the item of interest to the selected traders (70A,B,D). Traders (70B,D) then respond either directly to the enquirer (8A) or via the service system (40).

## Description

### Field of the Invention

The present invention relates to a shopping assistance service method and system whereby a mobile user can obtain information about the availability of goods and services from local traders. In the present specification, "availability" is to be understood broadly to mean obtainable through a trader and not just currently in stock with that trader.

### Background of the Invention

Communication infrastructures suitable for mobile users (in particular, though not exclusively, cellular radio infrastructures) have now become widely adopted. Whilst the primary driver has been mobile telephony, the desire to implement mobile data-based services over these infrastructures, has led to the rapid development of data-capable bearer services across such infrastructures. This has opened up the possibility of many Internet-based services being available to mobile users.

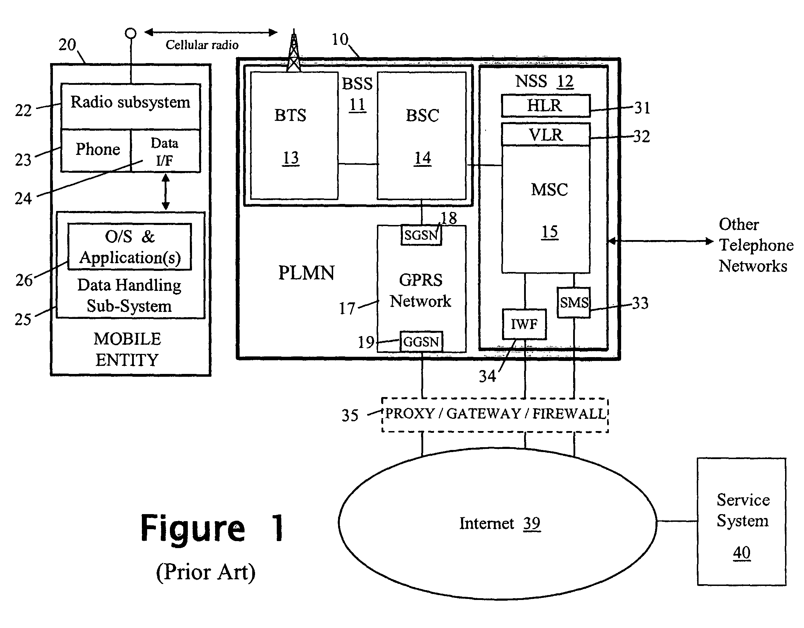

By way of example, Figure 1 shows one form of known communication infrastructure for mobile users providing both telephony and data-bearer services. In this example, a mobile entity 20, provided with a radio subsystem 22 and a phone subsystem 23, communicates with the fixed infrastructure of GSM PLMN (Public Land Mobile Network) 10 to provide basic voice telephony services. In addition, the mobile entity 20 includes a data-handling subsystem 25 interworking, via data interface 24, with the radio subsystem 22 for the transmission and reception of data over a data-capable bearer service provided by the PLMN; the data-capable bearer service enables the mobile entity 20 to communicate with a service system 40 connected to the public Internet 39. The data handling subsystem 25 supports an operating environment 26 in which applications run, the operating environment including an appropriate communications stack.

More particularly, the fixed infrastructure 10 of the GSM PLMN comprises one or more Base Station Subsystems (BSS) 11 and a Network and Switching Subsystem NSS 12. Each BSS 11 comprises a Base Station Controller (BSC) 14 controlling multiple Base Transceiver Stations (BTS) 13 each associated with a respective "cell" of the radio network. When active, the radio subsystem 22 of the mobile entity 20 communicates via a radio link with the BTS 13 of the cell in which the mobile entity is currently located. As regards the NSS 12, this comprises one or more Mobile Switching Centers (MSC) 15 together with other elements such as Visitor Location Registers 32 and Home Location Register 32.

When the mobile entity 20 is used to make a normal telephone call, a traffic circuit for carrying digitised voice is set up through the relevant BSS 11 to the NSS 12 which is then responsible for routing the call to the target phone (whether in the same PLMN or in another network).

With respect to data transmission to/from the mobile entity 20, in the present example three different data-capable bearer services are depicted though other possibilities exist. A first data-capable bearer service is available in the form of a Circuit Switched Data (CSD) service; in this case a full traffic circuit is used for carrying data and the MSC 32 routes the circuit to an Inter Working Function IWF 34 the precise nature of which depends on what is connected to the other side of the IWF. Thus, IWF could be configured to provide direct access to the public Internet 39 (that is, provide functionality similar to an IAP - Internet Access Provider IAP). Alternatively, the IWF could simply be a modem connecting to a PSTN; in this case, Internet access can be achieved by connection across the PSTN to a standard IAP.

A second, low bandwidth, data-capable bearer service is available through use of the Short Message Service that passes data carried in signalling channel slots to an SMS unit which can be arranged to provide connectivity to the public Internet 39.

A third data-capable bearer service is provided in the form of GPRS (General Packet Radio Service which enables IP (or X.25) packet data to be passed from the data handling system of the mobile entity 20, via the data interface 24, radio subsystem 21 and relevant BSS 11, to a GPRS network 17 of the PLMN 10 (and vice versa). The GPRS network 17 includes a SGSN (Serving GPRS Support Node) 18 interfacing BSC 14 with the network 17, and a GGSN (Gateway GPRS Support Node) interfacing the network 17 with an external network (in this example, the public Internet 39). Full details of GPRS can be found in the ETSI (European Telecommunications Standards Institute) GSM 03.60 specification. Using GPRS, the mobile entity 20 can exchange packet data via the BSS 11 and GPRS network 17 with entities connected to the public Internet 39.

The data connection between the PLMN 10 and the Internet 39 will generally be through a firewall 35 with proxy and/or gateway functionality.

Different data-capable bearer services to those described above may be provided, the described services being simply examples of what is possible.

In Figure 1, a service system 40 is shown connected to the Internet 40, this service system being accessible to the OS/application 26 running in the mobile entity by use of any of the data-capable bearer services described above. The data-capable bearer services could equally provide access to a service system that is within the domain of the PLMN operator or is connected to another public or private data network.

With regard to the OS/application software 26 running in the data handling subsystem 25 of the mobile entity 20, this could, for example, be a WAP application running on top of a WAP stack where "WAP" is the Wireless Application Protocol standard. Details of WAP can be found, for example, in the book "Official Wireless Application Protocol" Wireless Application Protocol Forum, Ltd published 1999 Wiley Computer Publishing. Where the OS/application software is WAP compliant, the firewall will generally also serve as a WAP proxy and gateway. Of course, OS/application 26 can comprise other functionality (for example, an e-mail client) instead of, or additional to, the WAP functionality.

The mobile entity 20 may take many different forms. For example, it could be two separate units such as a mobile phone (providing elements 22-24) and a mobile PC (data-handling system 25) coupled by an appropriate link (wireline, infrared or even short range radio system such as Bluetooth). Alternatively, mobile entity 20 could be a single unit such as a mobile phone with WAP functionality. Of course, if only data transmission/reception is required (and not voice), the phone functionality 24 can be omitted; an example of this is a PDA with built-in GSM data-capable functionality whilst another example is a digital camera (the data-handling subsystem) also with built-in GSM data-capable functionality enabling the upload of digital images from the camera to a storage server.

Whilst the above description has been given with reference to a PLMN based on GSM technology, it will be appreciated that many other cellular radio technologies exist and can typically provide the same type of functionality as described for the GSM PLMN 10.

Recently, much interest has been shown in "location-based", "location-dependent", or "location-aware" services for mobile users, these being services that take account of the current location of the user (or other mobile party). The most basic form of this service is the emergency location service whereby a user in trouble can press a panic button on their mobile phone to send an emergency request-for-assistance message with their location data appended. Another well known location-based service is the provision of traffic and route-guiding information to vehicle drivers based on their current position. A further known service is a "yellow pages" service where a user can find out about amenities (shops, restaurants, theatres, etc.) local to their current location. The term "location-aware services" will be used herein to refer generically to these and similar services where a location dependency exists.

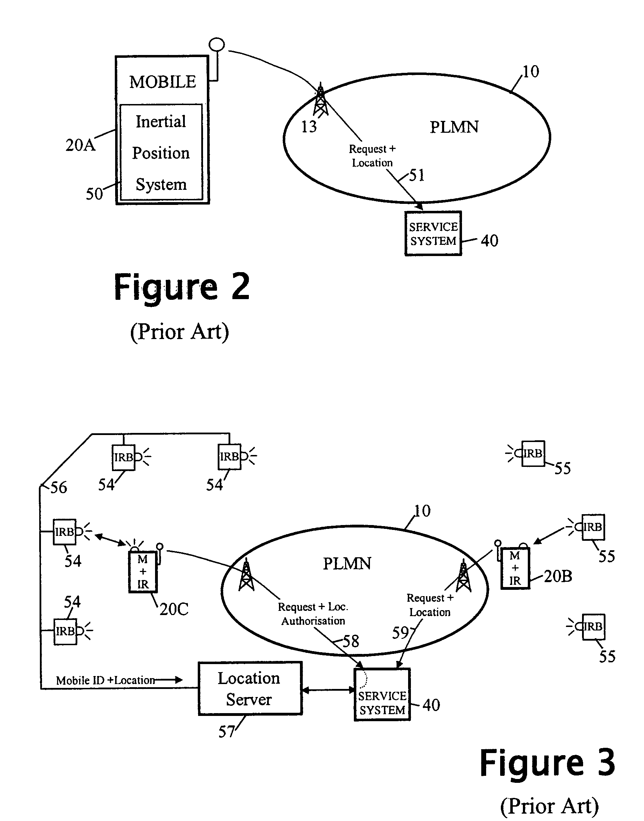

Location-aware services all require user location as an input parameter. A number of methods already exist for determining the location of a mobile user as represented by an associated mobile equipment. Example location-determining methods will now be described with reference to Figures 2 to 5. As will be seen, some of these methods result in the user knowing their location thereby enabling them to transmit it to a location-aware service they are interested in receiving, whilst other of the methods result in the user's location becoming known to a network entity from where it can be supplied directly to a location-aware service (generally only with the consent of the user concerned). It is to be understood that additional methods to those illustrated in Figures 2 to 5 exist.

As well as location determination, Figures 2 to 5 also illustrate how the mobile entity requests a location-aware service provided by service system 40. In the present examples, the request is depicted as being passed over a cellular mobile network (PLMN 10) to the service system 40. The PLMN is, for example, similar to that depicted in Figure 1 with the service request being made using a data-capable bearer service of the PLMN. The service system 40 maybe part of the PLMN itself or connected to it through a data network such as the public Internet. It should, however, be understood that infrastructure other than a cellular network may alternatively be used for making the service request

The location-determining method illustrated in Figure 2 uses an inertial positioning system 50 provided in the mobile entity 20A, this system 50 determining the displacement of the mobile entity from an initial reference position. When the mobile entity 20A wishes to invoke a location-aware service, it passes its current position to the corresponding service system 40 along with the service request 51. This approach avoids the need for an infrastructure to provide an external frame of reference; however, cost, size and long-term accuracy concerns currently make such systems unattractive for incorporation into mass-market handheld devices.

Figure 3 shows two different location-determining methods both involving the use of local, fixed-position, beacons here shown as infra-red beacons IRD though other technologies, such as short-range radio systems (in particular, "Bluetooth" systems) may equally be used. The right hand half of Figure 3 show a number of independent beacons 55 that continually transmit their individual locations. Mobile entity 20B is arranged to pick up the transmissions from a beacon when sufficiently close, thereby establishing its position to the accuracy of its range of reception. This location data can then be appended to a request 59 made by the mobile entity 20B to a location-aware service available from service system 40. A variation on this arrangement is for the beacons 55 to transmit information which whilst not directly location data, can be used to look up such data (for example, the data may be the Internet home page URL of a store housing the beacon 55 concerned, this home page giving the store location - or at least identity, thereby enabling look-up of location in a directory service).

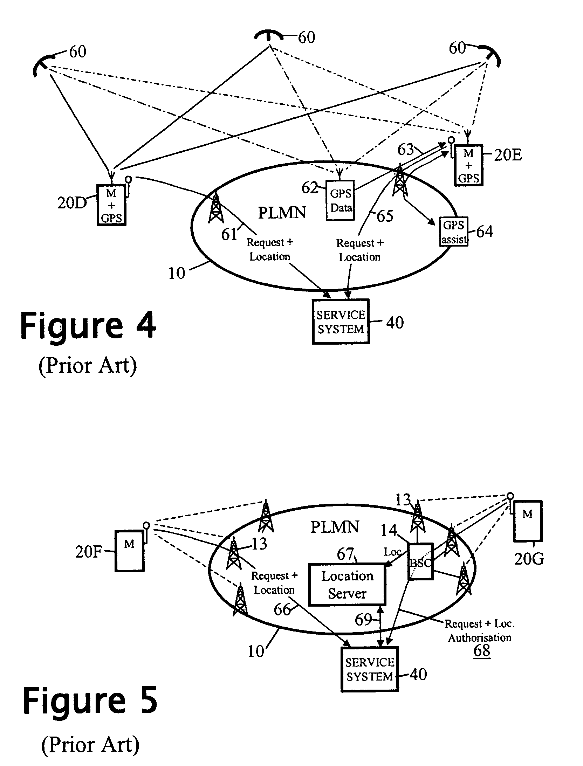

In the left-hand half of Figure 3, the IRB beacons 54 are all connected to a network that connects to a location server 57. The beacons 54 transmit a presence signal and when mobile entity 20C is sufficiently close to a beacon to pick up the presence signal, it responds by sending its identity to the beacon. (Thus, in this embodiment, both the beacons 54 and mobile entity 20C can both receive and transmit IR signals whereas beacons 55 only transmit, and mobile entity 20B only receives, IR signals). Upon a beacon 54 receiving a mobile entity's identity, it sends out a message over network 56 to location server 57, this message linking the identity of the mobile entity 20C to the location of the relevant beacon 54. Now when the mobile entity wishes to invoke a location-aware service provided by the service system 40, since it does not know its location it must include it's identity in the service request 58 and rely on the service system 40 to look up the current location of the mobile entity in the location server 57. Because location data is personal and potentially very sensitive, the location server 57 will generally only supply location data to the service system 40 after the latter has produced an authorizing token supplied by the mobile entity 20B in request 58. It will be appreciated that whilst service system 40 is depicted as handling service requests form both types of mobile entity 20 B and 20C, separate systems 40 may be provided for each mobile type (this is likewise true in respect of the service systems depicted in Figures 4 and 5).

Figure 4 depicts several forms of GPS location-determining system. On the left-hand side of Figure 4, a mobile entity 20D is provided with a standard GPS module and is capable of determining the location of entity 20D by picking up signals from satellites 60. The entity 20D can then supply this location when requesting, in request 61, a location-aware service from service system 40.

The right-hand side of Figure 4 depicts, in relation to mobile entity 20E, two ways in which assistance can be provided to the entity in deriving location from GPS satellites. Firstly, the PLMN 10 can be provided with fixed GPS receivers 62 that each continuously keep track of the satellites 60 visible from the receiver and pass information in messages 63 to local mobile entities 20E as to where to look for these satellites and estimated signal arrival times; this enables the mobile entities 20E to substantially reduce acquisition time for the satellites and increase accuracy of measurement (see "Geolocation Technology Pinpoints Wireless 911 calls within 15 Feet" 1-Jul-99 Lucent Technologies, Bell Labs). Secondly, as an alternative enhancement, the processing load on the mobile entity 20E can be reduced and encoded jitter removed using the services of network entity 64 (in or accessible through PLMN 10).

One the mobile unit 20E has determined its location, it can pass this information in request 65 when invoking a location-aware service provided by service system 40.

Figure 5 depicts two general approaches to location determination from signals present in a cellular radio infrastructure. First, it can be noted that in general both the mobile entity and the network will know the identity of the cell in which the mobile entity currently resides, this information being provided as part of the normal operation of the system. (Although in a system such as GSM, the network may only store current location to a resolution of a collection of cells known as a "location area", the actual current cell ID will generally be derivable from monitoring the signals exchanged between the BSC 14 and the mobile entity). Beyond current basic cell ID, it is possible to get a more accurate fix by measuring timing and/or directional parameters between the mobile entity and multiple BTSs 13, these measurement being done either in the network or the mobile entity (see, for example, International Application WO 99/04582 that describes various techniques for effecting location determination in the mobile and WO 99/55114 that describes location determination by the mobile network in response to requests made by location-aware applications to a mobile location center - server- of the mobile network).

The left-hand half of Figure 5 depicts the case of location determination being done in the mobile entity 20F by, for example, making Observed Time Difference (OTD) measurements with respect to signals from BTSs 13 and calculating location using a knowledge of BTS locations. The location data is subsequently appended to a service request 66 sent to service system 40 in respect of a location-aware service. The calculation load on mobile entity 20F could be reduced and the need for the mobile to know BTS locations avoided, by having a network entity do some of the work. The right-hand half of Figure 5 depicts the case of location determination being done in the network, for example, by making Timing Advance measurements for three BTSs 13 and using these measurements to derive location (this derivation typically being done in a unit associated with BSC 14). The resultant location data is passed to a location server 67 from where it can be made available to authorised services. As for the mobile entity 20C in Figure 3, when the mobile entity 20G of Figure 5 wishes to invoke a location-aware service available on service system 50, it sends a request 69 including an authorisation token and its ID (possible embedded in the token) to the service system 40; the service system then uses the authorisation token to obtain the current location of the mobile entity 20G from the location server 67.

In the above examples, where the mobile entity is responsible for determining location, this will generally be done only at the time the location-aware service is being requested. Where location determination is done by the infrastructure, it may be practical for systems covering only a limited number of users (such as the system illustrated in the left-hand half of Figure 2 where a number of infrared beacons 54 will cover a generally fairly limited) for location-data collection to be done whenever a mobile entity is newly detected by an IRB, this data being passed to location server 57 where it is cached for use when needed. However, for systems covering large areas with potentially a large number of mobile entities, such as the Figure 5 system, it is more efficient to effect location determination as and when there is a perceived need to do so; thus, location determination maybe triggered by the location server 67 in response to the service request 68 from the mobile entity 20G or the mobile entity may, immediately prior to making request 68, directly trigger BSC 14 to effect a location determination and feed the result to location server 67.

Further with respect to the location servers 57, 67, whilst access authorisation by location-aware services has been described as being through authorisation tokens supplied by the mobile entities concerned, other authorisation techniques can be used. In particular, a location-aware service can be prior authorised with the location server in respect of particular mobile entities; in this case, each request from the service for location data needs only to establish that the request comes from a service authorised in respect of the mobile entity for which the location data is requested.

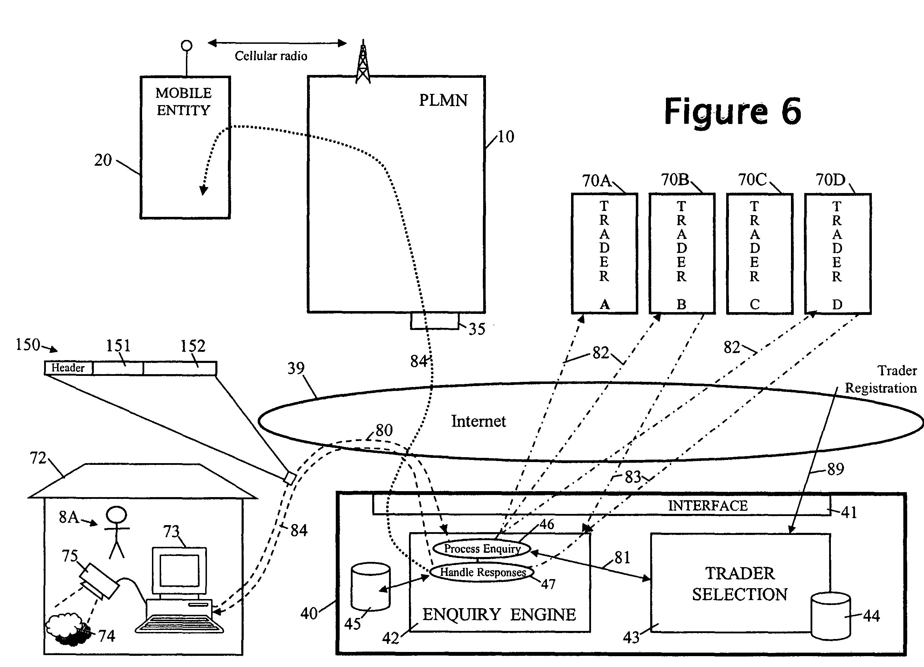

As already indicated, Figures 2 to 5 depict only some examples of how location determination can be achieved, there being many other possible combinations of technology used and where in the system the location-determining measurements are made and location is calculated, stored and used .Thus, the location-aware service may reside in the mobile entity whose location is of interest, in a network-connected service system 40 (as illustrated), or even in another mobile entity. Furthermore, whilst in the examples of Figures 2 to 5, invocation of the location-aware service has been by the mobile entity whose location is of interest, the nature of the location-aware service may be such that it is invoked by another party (including, potentially, the PLMN itself). In this case, unless the invoking party already knows the location of he mobile entity and can pass this information to the location-aware service (which may, for example, may be situation where the PLMN invokes the service), it is the location-aware service that is responsible for obtaining the required location data, either by sending a request to the mobile entity itself or by requesting the data from a location server. Unless the location server already has the needed information in cache, the server proceeds to obtain the data either by interrogating the mobile entity or by triggering infrastructure elements to locate the mobile. For example, where a location-aware service running on service system 40 in Figure 5 needs to find the location of mobile 20G, it could be arranged to do so by requesting this information from location server 67 which in turn requests the location data from the relevant BSC, the latter then making the necessary determination using measurements from BTSs 13. Figure 6 depicts the various possibilities discussed above.

Although in the foregoing, the provision of location data through the mobile radio infrastructure to the mobile entity has been treated as a service effected over a data-capable bearer channel, it may be expected that as location data becomes considered a basic element of mobile radio infrastructure services, provision will be made in the relevant mobile radio standards for location data to be passed over a signalling channel to the mobile entity.

The present invention concerns a shopping assistance service whereby a mobile user can obtain information about the availability of goods and services from local traders. It is known to provide shopping brokerage services which, in response to a user enquiry, determine where specified goods / services are available. It is also known to take account of a mobile user's current location in providing information about local traders.

It is an object of the present invention to provide an improved location-aware shopping assistance service method and system.

### Summary of the Invention

According to one aspect of the present invention, there is provided a shopping assistance method, comprising the steps of:
- sending an enquiry message from an enquirer to a service system, the enquiry message including a description of an item of interest which description is intended for human interpretation and takes the form of image and/or unstructured audio data;
- at the service system, automatically:
   - determining a location associated with the enquiry,
   - selecting from a database of traders, traders appropriate to the enquiry at least in terms of location and the type of the item of interest, and
   - forwarding the description of the item of interest to the selected traders in an availability enquiry; and
   - providing a way for the selected traders to respond to the enquiry.
The availability enquiry may include contact information for the enquirer thereby enabling the selected traders to respond directly to the enquirer. Alternatively, the selected traders may be required to respond via the service system which can be arranged to preserve the anonymity of the enquirer

According to another aspect of the present invention, there is provided a shopping-assistance service system, comprising:
- an enquiry-receiving subsystem for receiving an enquiry message from a remote enquirer over a communications network, the enquiry message including a description of an item of interest which description is intended for human interpretation and takes the form of image and/or unstructured audio data;
- a store for at least temporarily storing said description;
- a location subsystem for automatically determining a location associated with the enquiry,
- a trader selection subsystem for automatically selecting from a database of traders, traders appropriate to the enquiry at least in terms of location and the type ofthe item of interest, and
- an output subsystem for forwarding the description of the item of interest to the selected traders in an availability enquiry; and
- an enquirer-contact subsystem for providing a way for the selected traders to respond to the enquiry.

### Brief Description of the Drawings

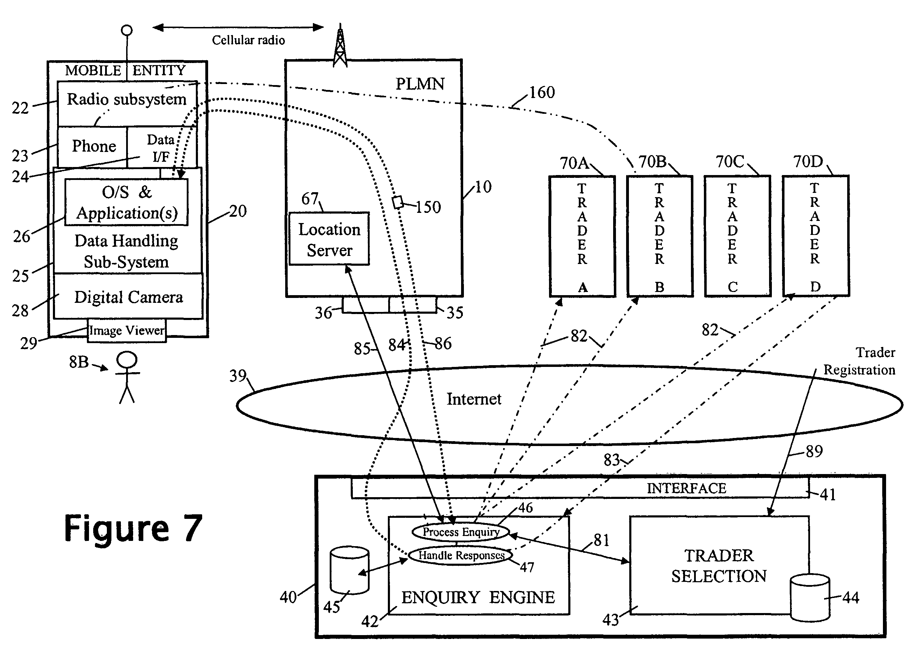

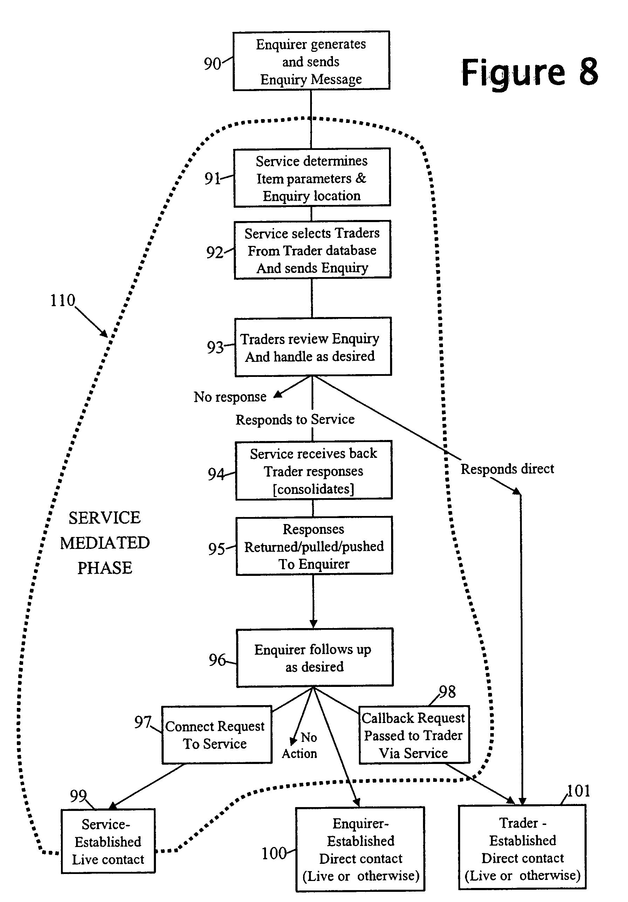

A shopping assistance method and service system, both embodying the present invention, will now be described, by way of non-limiting example, with reference to the accompanying diagrammatic drawings, in which:
- **. Figure 1**: is a diagram of a known communications infrastructure usable for transferring voice and data to/from a mobile entity;
- **. Figure 2**: is a diagram illustrating one known approach to determining the location of a mobile entity, this approach involving providing the entity with an inertial positioning system;
- **. Figure 3**: is a diagram illustrating another known approach to determining the location of a mobile entity, this approach being based on proximity of the mobile entity to fixed-position local beacons;
- **. Figure 4**: is a diagram illustrating a further known approach to determining the location of a mobile entity, this approach involving the use of GPS satellites;
- **. Figure 5**: is a diagram illustrating a still further approach to determining the location of a mobile entity, this approach being based on the use of signals present in a cellular mobile radio communications system;
- **. Figure 6**: is a diagram illustrating the service system and method of the present invention for an enquiry made from the enquirer's home;
- **. Figure 7**: is a diagram illustrating the service system and method of the present invention for an enquiry made from a mobile entity; and
- **. Figure 8**: is a diagram illustrating steps involved in the enquiry process of Figures 6 and 7.

### Best Mode of Carrying Out the Invention

The shopping assistance service method and system embodying the invention will now be described with reference to Figures 6 and 7 which show the service system 40 as connected to the public Internet 39. A user can make a shopping enquiry either from a fixed installation (user's home PC 73 in Figure 6) or using a mobile entity 20 the location of which is obtainable through a location server 67 of PLMN 10 (see Figure 7). It is to be understood that the present invention is not limited to the specifics of the fixed installation 73, mobile entity 20, location discovery means, and communication infrastructure shown in Figure 6 and 7; the generalisations discussed above in relation to Figure 1 to 5 regarding these elements apply equally to the operational context of the service system 40. Furthermore, whilst the service system 40 is shown as connected to the public Internet, it could be connected to the GPRS network 17 or to another fixed data network interfacing directly or indirectly with the network 17 or network 39; it will also be appreciated that any appropriate data-capable bearer service (not just GPRS) can be used for passing data through PLMN 10.

In Figure 6, four traders A, B, C, D are shown, each trader having respective premises 70A, 70B, 70C, 70D. Each trader is registered with the service system 40, this registration being effected, for example, by a web-based registration process 89 over internet 39. The registration details of each trader include the location of the corresponding trading premises 70, the types of goods available through the trader, and contact details (for example, IP address, e-mail address or phone and/or fax number). The registration details of the traders are held in database 44.

A person 8 wishing to make a shopping enquiry about the availability of an item of interest does so by sending an enquiry to the service system 40. In the first example depicted in Figure 6, the person making the enquiry (the enquirer 8A) is located at home 72 and uses home PC 73 to send an enquiry message 150 via a dial-up internet access service, internet 39, and service-system interface 41, to an enquiry engine 42 of the service system 40 (see dashed line 80). This enquiry message 150 comprises a structured data part 151 and an unstructured description part 152. The structured data part 151 comprises data elements of known significance (for example, pairs of parameter names and values, or parameter values arranged in an ordered list, the significance of each value being known by its order position in the list). These data elements are used to pass information that generally characterises the item of interest - for example, by type of item (such as a scarf), its colour, and maximum price the enquirer is willing to pay. The structured data part can be generated using a web form interface, the enquirer inputting the general characteristics of the item of interest by keyboard input, selection from a list, audio input of an appropriate word, or any other suitable method.

In the present embodiment, the structured data part 151 of enquiry message 150 also includes location data that serves to indicate the locality in which traders must have premises in order to be of interest to the enquirer. This locality may be dependent on the user's current location (in which case, the location data can comprise the user's current location included, for example, automatically following location discovery by any of the previously described techniques), or be a specific zone where the enquirer wishes to shop, regardless of the enquirer's current location. The location data may explicitly indicate the locality or, in the case where the enquirer has pre-registered with the service system 40, may reference locality information held by the service system in a user profile for the enquirer; indeed, in this latter case, if the enquirer is only ever interested in shopping in one particular locality, the location data can be omitted from the enquiry message as the locality of interest to the enquiry is pre-specified in the user profile. As will be seen later, the location data can also be omitted if the enquirer is interested in shopping in a locality determined by the enquirer's current location and means are available for enabling the service system to separately determine the enquirer's location .

The unstructured description part 152 of the enquiry message provides more detailed information about the item of interest and can comprise an image of an example item 74 possessed by the enquirer, the image being created using digital camera 75 and transferred to PC 73; thus, the enquirer may be seeking an item of the type and colour specified in the structured data part 151 which looks like the example item shown in the image. Additionally or alternatively to providing an image, the description part 152 can comprise an unstructured digitised verbal description (thus the enquirer may say "I want a scarf like the one shown in the accompanying image but with finer check pattern and a little wider"). The description part thus provides a simple, user-friendly way for capturing substantial detail about what the enquirer wants. The description part is intended to be understood and interpreted by humans - in particular by human agents of the traders 70.

The description part 151 is considered unstructured in the sense that the information it contains is not organised in a predetermined manner as is done for the structured data part 151. Thus whilst both parts may, for example, contain audio data, the audio data in the structured data part 151 is provided as one or more words of predetermined significance (that is, they relate to specific parameters), whereas the audio data in the description part 152 has no immediate significance without detailed syntactical, semantic and contextual analysis, something which a human is much better at than a machine.

At the service system 40, the enquiry message 150 is received by a process 46 of the enquiry engine 42. Process 46 extracts from the structured data part 151 of message 150 the type information about the item of interest and the location data; where the location data does not explicitly indicate the trader locality of interest to the enquirer, the location data is used to determine this locality (for example, by look-up in a user-profile database, not shown, as already indicated above). The process 46 then passes the locality information and item-type information to a trader selection sub-system 43 which searches database 44 for traders that have premises in the specified locality and trade in goods of the type indicated. Where other, more specific, item parameters (such as maximum price and colour) have been specified in the structured data part, it may be possible to further refine the search for traders but generally the database 44 will not hold sufficiently detailed information for such parameters to be used as search parameters.

The trader-selection sub-system 43 returns the results of its search for relevant traders to the process 46 together with the contact details of the traders concerned. The process 46 then sends an availability enquiry to each selected trader (in the present case, traders A, B and D - see arrows 82), this enquiry including the structured data part and description part from the enquiry message 150. In the present example, the availability enquiry is sent to the traders A, B and D over the internet; however, the enquiry could be sent by alternative means. Furthermore, in the current embodiment, the identity of the enquirer is not sent to the traders, at least at this time.

The availability enquiry is received at the traders A, B and D and is examined by human agents who, on the basis of the supplied item information, including in particular the image and/or audio information contained in the description part 152, determine whether they have items available that are likely to meet the enquirer 's need. In the present example, traders B and D believe they can meet the enquirer's need and send positive responses to the service system 40 (see arrows 83). These responses contain an enquiry identifier originally included in the corresponding availability enquiry, this identifier enabling a process 47 of the enquiry engine 42 to relate the received responses to the original enquiry details (these details being temporarily stored by the process 46). Process 47 then forwards the responses (either individually or after collating responses received back within a predetermined time window) to the enquirer via the internet 39 (see arrow 84). In fact, since the responses may take some time to be prepared and sent by the selected traders, then unless the enquirer has a permanent internet connection, it will generally be preferable not to rely on the internet to return the responses to the enquirer but to either forward the responses to the enquirer by e-mail or fax, or to have the enquirer retrieve the responses from the service system at a time convenient to the user. In this latter case, the responses are temporarily stored in database 45 pending retrieval by the enquirer after appropriate identification (for example, using the same enquiry identifier as passed to the traders, this identifier being assigned and passed to the enquirer by the process 46 upon first receipt of the enquiry message 150).

Of course, where the responses are retrieved by the enquirer, this can be done from a different location and using a different device - thus the enquirer having made the original enquiry form home can decide to go out shopping to a shopping zone covered by the location data sent in the enquiry and then use a mobile device 20 to retrieve the responses from the service system via a data-capable bearer service of an associated PLMN 10. It may also be noted that where the service system is tasked with forwarding the responses to the enquirer, the contact details given by the enquirer need not correspond to the device used to make the enquiry (in this case, PC 73) but could correspond to another device, such as mobile device 20.

Having received the responses from the traders B and D, the enquirer 8A can decide whether or not to take follow-up action. Such action can include:
(a) - directly contacting one (or more) of the responding traders where the contact details of the trader have been included in the response;
(b) - passing a message via the service system to one (or more) of the responding traders asking them to make direct contact, the enquirer's contact details being included in the message to the trader (either by being included by the enquirer or by having the service system include the details where the service system holds these details in a user profile database);
(c) - instructing the service system to establish direct live communication between the enquirer and trader concerned, the service system thereupon serving to mediate the establishment of direct live communication.

In cases (a) and (b) direct contact can be contact by e-mail, voice mail or fax, or by live communication such as telephone or real-time internet communication (with at least one party being supplied with the current IP address of the other). In case (c), direct live communication can over a telephone voice circuit set up by the service system via a third-party call set-up interface (for example, a Parlay interface)of the telephone system.

Figure 7 is similar to Figure 6 but depicts the shopping-assistance service system 40 being used by a mobile enquirer 8B using mobile entity 20. The mobile entity 20 comprises elements 22 to 26 as described with respect to Figure 1 and, in addition, a digital camera 28 with image viewer 29. The enquirer 8B composes an enquiry message 150 in substantially the same manner as described above with respect to Figure 6 using the camera 28 to generate an image for inclusion in the description part 152 of the message. However, the structured data part 151 of the message need not include location data where the shopping locality of interest is to be determined by the current location of the enquirer - this is because the enquirer's current location can be obtained by the service system from a location server 67 of the PLMN 10 used by the mobile entity (assuming the service system is appropriately authorised). Thus, upon the enquirer sending the enquiry message 150 to the service system using a data-capable bearer service of the PLMN 10 and internet 39 (see arrow 86), the process 46 of enquiry engine 42 will contact location server 67 via interface 36 to retrieve the enquirer's location (see arrow 85) unless the structured data part 151 of message 150 already includes location data.

The operation of the service system now proceeds as for the Figure 6 embodiment with availability enquiries (arrows 82) being sent to selected traders and their responses (in this case, only from trader D) being returned via the service system to the mobile entity (see arrows 83 and 84). As with the Figure 6 embodiment, the service system (process 47) can forward the response to the mobile entity 20 or can temporarily hold the response in store 45 pending retrieval by mobile entity 20 (or other device such as PC 73). The enquirer 8B can then take appropriate follow-up action in respect of interesting responses.

Figure 7 also depicts a trader (trader B) directly contacting enquirer 8B via a voice circuit of PLMN 10 (see arrow 160). This is only possible, of course, where the contact details (e.g. mobile phone number) are supplied to the trader either in the initial availability enquiry or as a result of response follow-up action by the enquirer. Providing the contact details in the initial enquiry has the advantage that the trader is more likely to respond quickly (on the basis that the first trader to establish live customer contact is more likely to win the business); however, the enquirer may be sensitive to privacy issues and wish to have more selective control of who receives his/her contact details.

For convenience, Figure 8 illustrates the steps of the shopping assistance service method described above, including the variants mentioned in respect of one or other of the Figure 6 and 7 embodiments. More particularly, the method is initiated by enquirer generating and sending an enquiry message (step 90) upon receipt of which the service system determines item type parameters and location data (step 91) which it uses to select the traders to be presented with the enquiry (step 92). The selected traders then review the enquiry and handle as desired (step 93) including by taking no action, sending a response back to the service system, or responding directly to the enquirer (see block 101, this option only being available where enquirer contact details are included in the enquiry sent to the trader). Where a response is sent to the service system, it is received and possibly consolidated with other responses by the service system (step 94) and then passed to the enquirer (either pushed to enquirer or pulled by enquirer, see step 95). The enquirer then takes any desired follow-up action (step 96) including establishing direct contact with a trader (block 100), having the service system pass a call-back request to a trader (step 98) to have the trader establish direct contact (block 101), and requesting the service system (step 97) to set-up a direct live connection between the enquirer and a specified trader (block 99).

Dotted boundary 110 indicates the method steps for which the service system acts as a mediator between the enquirer and the traders.

As will be appreciated by persons skilled in the art, many variants are possible to the above described shopping-assistance service method and system. Thus, the structured data part 151 of enquiry message 150 can be omitted where the service system is provided with appropriate analysis functionality for analysing the description part of the enquiry message to extract at least general item-type data for use in constraining the trader selection process. This analysis functionality can comprise image analysis functionality for determining the general type of an article shown in image data, and/or audio analysis functionality for picking out item type from the words of an audio message included in the description part of the enquiry message.

Another possible variant is for traders to respond by sending back to the enquirer (either directly or via the service system) the URI of an internet resource (e.g. a web page URL) where the enquirer can find more information about items available through the trader concerned; this resource could be an on-line store catalogue or a page specifically customised to the availability enquiry concerned.

It will be appreciated that one enquiry message could relate to several different items and in this case the enquiry engine 42 will carry out searches in respect of each item. Furthermore, the enquirer in following up responses received back from the traders, can reserve or purchase the item by sending back a corresponding instruction either directly or via the service system. In this latter case, the service system can perform the role of a broker and provide some guarantee to the trader concerned about the reliability of the enquirer (the service system will generally only perform such a role where enquirers have pre-registered with it and have provided various personal financial details).

## Claims

1. A shopping assistance method, comprising the steps of:
- sending an enquiry message from an enquirer to a service system, the enquiry message including a description of an item of interest which description is intended for human interpretation and takes the form of image and/or unstructured audio data;
- at the service system, automatically:
- determining a location associated with the enquiry,
- selecting from a database of traders, traders appropriate to the enquiry at least in terms of location and the type of the item of interest, and
- forwarding the description of the item of interest to the selected traders in an availability enquiry; and
- providing a way for the selected traders to respond to the enquiry.

2. A method according to claim 1, wherein said location is the location of the enquirer.

3. A method according to claim 2, wherein the enquiry message is sent from a mobile entity over a cellular radio infrastructure to the service system, the latter determining the location of the enquirer from a location server of the cellular radio infrastructure.

4. A method according to claim 1, wherein said location is a shopping location identified in the enquiry message by the enquirer.

5. A method according to claim 1, wherein the enquiry message includes a structured data part containing at least one type parameter for the item of interest, this at least one parameter being used in selecting said traders.

6. A method according to claim 1, wherein the service system is operative to process said description to extract at least one type parameter for the item of interest, this at least one parameter being used in selecting said traders.

7. A method according to claim 1, wherein said availability enquiry contains contact information enabling a said selected trader to directly contact the enquirer to inform the latter, on the basis of the description contained in the availability enquiry, about the availability through the trader of items of the same type as the item of interest.

8. A method according to claim 1, wherein at least one said selected trader, on the basis of the description contained in the availability enquiry, sends a response to the service system giving information about the availability through the trader of items of the same type as the item of interest.

9. A method according to claim 8, wherein the service system forwards said response to the enquirer.

10. A method according to claim 8, wherein the service system stores said response and the enquirer subsequently contacts the service system and retrieves the response.

11. A method according to claim 8, wherein multiple selected traders provide respective responses to the service system, the service system collating the responses and forwarding them to the enquirer.

12. A method according to claim 8, wherein multiple selected traders provide respective responses to the service system, the service system collating the responses and storing them, the enquirer subsequently contacting the service system and retrieving the collated responses.

13. A method according to any one of claims 9 to 12, wherein the enquirer having received a said response via the service system and having decided that the response is of interest, directly contacts the trader concerned using trader contact information contained in the response.

14. A method according to any one of claims 9 to 12, wherein the enquirer having received a said response via the service system and having decided that the response is of interest, requests the service system to establish direct live communication between the enquirer and trader concerned, the service system thereupon serving to mediate the establishment of direct live contact.

15. A method according to claim 14, wherein direct contact is established as a voice circuit via a telephone system, the service system interacting with a call setup interface of the telephone system to set up said voice circuit.

16. A method according to any one of claims 9 to 12, wherein the enquirer having received a said response via the service system and having decided that the response is of interest, requests the trader concerned, via service system, to establish direct communication with the enquirer, this request including contact information for enabling the trader to contact the enquirer.

17. A method according to any one of claims 7, 13, or 16, wherein direct contact is established by at least one of telephone, voice mail, fax, or e-mail.

18. A method according to claim 1, wherein a said selected trader, on the basis of the description contained in the availability enquiry, sends a response to the enquirer, either directly or via said service system, giving a URI where the enquirer can find information about items of the same type as the item of interest that are available through the trader.

19. A method according to claim 18, wherein the enquirer uses said URI to access said information.

20. A method according to claim 1, wherein the service system in sending said availability enquiry does not disclose the identity of the enquirer.

21. A shopping-assistance service system, comprising:
- an enquiry-receiving subsystem for receiving an enquiry message from a remote enquirer over a communications network, the enquiry message including a description of an item of interest which description is intended for human interpretation and takes the form of image and/or unstructured audio data;
- a store for at least temporarily storing said description;
- a location subsystem for automatically determining a location associated with the enquiry,
- a trader selection subsystem for automatically selecting from a database of traders, traders appropriate to the enquiry at least in terms of location and the type of the item of interest, and
- an output subsystem for forwarding the description of the item of interest to the selected traders in an availability enquiry; and
- an enquirer-contact subsystem for providing a way for the selected traders to respond to the enquiry.

22. A system according to claim 21, wherein the enquiry message is sent from a mobile entity over a cellular radio infrastructure to the service system, the location subsystem of the service system being operative to determine the location of the enquirer from a location server of the cellular radio infrastructure.

23. A system according to claim 21, wherein said location is included in the enquiry message and the location subsystem is operative to extract this location from the enquiry message.

24. A system according to claim 21, wherein the enquiry message includes a structured data part containing at least one type parameter for the item of interest, the trader selection subsystem being operative to access this type parameter and use it in selecting said traders.

25. A system according to claim 21, wherein the enquirer-contact subsystem is operative to cause the output subsystem to include enquirer contact details in said availability enquiry.

26. A system according to claim 21, wherein the enquirer-contact subsystem is operative to receive responses from the selected traders and to make them available, either individually or as a collation, to the enquirer.

27. A system according to claim 26, wherein is operative to make the trader responses available to the enquirer by forwarding them over a communications network towards the enquirer.

28. A system according to claim 26, wherein the enquirer-contact subsystem is operative to make the trader responses available by storing them at the service system for retrieval by the enquirer.

29. A system according to claim 26, wherein the enquirer-contact subsystem is further operative, in responsive to the enquirer indicating that they wish to contact the trader who originated a particular said response, to mediate the establishment of direct live contact between the enquirer and that trader.

30. A system according to claim 29, wherein the enquirer-contact subsystem is operative to mediate the establishment of direct live contact by interacting with a call setup interface of a telephone network system to set up a voice circuit between the enquirer and trader.

31. A system according to claim 29, wherein the enquirer-contact subsystem is operative to mediate the establishment of direct live contact by sending a request to the trader concerned to establish direct communication with the enquirer, this request including contact information for enabling the trader to contact the enquirer.
